# FASCICULE DE BREVET EUROPEEN

(11) **EP 4 419 477 B1**
(45) Date de publication et mention de la délivrance du brevet: **17.12.2025**
(21) Numéro de dépôt: 22809037.9
(22) Date de dépôt: 21.10.2022
(51) Int. Cl.: C01B 3/00, C01B 3/22

(54) **MELANGES DE LIQUIDES ORGANIQUES PORTEURS D'HYDROGENE, LEURS UTILISATIONS POUR LE TRANSPORT ET LE STOCKAGE D'HYDROGENE, ET LES PROCEDES DE GENERATION D'HYDROGENE LES UTILISANT**
MISCHUNGEN AUS FLÜSSIGEN ORGANISCHEN WASSERSTOFFTRÄGERN, VERWENDUNGEN DAVON ZUM TRANSPORT UND ZUR LAGERUNG VON WASSERSTOFF UND WASSERSTOFFERZEUGUNGSVERFAHREN DAMIT
MIXTURES OF LIQUID ORGANIC HYDROGEN CARRIERS, USES THEREOF FOR TRANSPORTING AND STORING HYDROGEN, AND HYDROGEN GENERATION METHODS USING SAME

(30) Priorité: 22.10.2021 FR 2111265
(43) Date de publication de la demande: 28.08.2024
(73) Titulaire: Commissariat à l'Energie Atomique et aux Energies Alternatives, 75015 Paris (FR)
(72) Inventeur: D'AMBRA, Florian, 38054 Grenoble Cedex 09 (FR); FAUCHEUX, Vincent, 38054 Grenoble Cedex 09 (FR); NICOLAS, Emmanuel, 38054 Grenoble Cedex 09 (FR); SILVA COSTA, Raphaël, 38054 Grenoble Cedex 09 (FR)
(74) Mandataire: Gevers & Orès
(86) Numéro de dépôt international: PCT/EP2022/079474
(87) Numéro de publication internationale: WO 2023/067190

(56) Documents cités:
- EP-A1- 3 725 738
- WO-A1-2020/141520
- FR-A1- 3 099 854
- US-A1- 2010 055 513
- US-A1- 2017 283 257

## Description

La présente invention concerne des mélanges de liquides organiques porteurs d'hydrogène (LOHC), ainsi que les couples mélange de LOHC / LOHC déshydrogéné(s) correspondant(s). L'invention vise également leurs utilisations pour le transport et le stockage d'hydrogène, et les procédés de génération d'hydrogène les utilisant.

Après plus d'un siècle d'utilisation intensive des combustibles fossiles comme source d'énergie prédominante, ces ressources naturelles s'épuisent et il est de plus en plus nécessaire de développer des sources d'énergie alternatives afin de remplacer les sources traditionnelles. Celles-ci doivent être peu coûteuses, sûres, non polluantes et faciles à mettre en œuvre.

Pour ces raisons, ont notamment été développés des fluides organiques stables susceptibles de stocker et relarguer de façon sûre et efficace un fluide énergétique, par exemple un carburant, par le biais d'une réaction catalytique.

Contenant la plus haute densité énergétique par unité de masse et ne produisant que de l'eau lors de sa combustion ou de son oxydation dans une pile à combustible hydrogène-oxygène, l'hydrogène est considéré comme l'un des candidats les plus efficaces et les plus respectueux de l'environnement en tant que futur carburant. L'hydrogène est un composé très énergétique par rapport aux combustibles fossiles conventionnels et brûle dans l'air à des concentrations très variées (notamment de 5 % à 75 %).

Le concept relatif à l'utilisation de l'hydrogène comme vecteur énergétique d'importance a été suggéré dès les années 1970. Cependant, le transport et le stockage de l'hydrogène sont des points clés pour accéder à l'attrayante "ère de l'hydrogène". Ainsi, un défi majeur consiste à trouver des vecteurs d'hydrogène appropriés. Depuis des décennies, les scientifiques recherchent des matériaux appropriés pour le stockage de l'hydrogène.

Récemment, les composés organiques, tels que l'acide formique, les mélanges méthanol-eau, formaldéhyde-eau et les glucides, ont été étudiés de manière intensive en tant que matériaux potentiels de stockage de l'hydrogène. Parmi eux, les liquides organiques porteurs d'hydrogène (LOHC), qui peuvent être déshydrogénés et hydrogénés en impliquant de grandes quantités d'hydrogène et pourraient être utilisés pour les applications de transport terrestre, présentent un intérêt particulier.

Dans le principe, l'hydrogène est fixé sur le liquide organique pauvre en hydrogène (LOHC déshydrogéné) grâce à une réaction d'hydrogénation pour produire un liquide organique riche en hydrogène (LOHC hydrogéné) qui doit être un liquide stable dans les conditions ambiantes et donc transportable et stockable. Le liquide organique riche en hydrogène est ensuite déshydrogéné dans une seconde réaction afin de régénérer l'hydrogène et le liquide organique pauvre en hydrogène. Avantageusement, ces LOHC sont donc aptes à être hydrogénés et déshydrogénés de manière réversible en présence d'un catalyseur. En outre, grâce à leur forte densité volumétrique (50-100 g d'hydrogène par litre de LOHC hydrogéné) et teneur massique (typiquement 5-7% massique d'hydrogène dans le LOHC hydrogéné) et à leur stabilité dans les conditions ambiantes il est possible de les transporter et de les stocker dans de simples réservoirs, citernes ou pipelines. Les LOHC les plus cités sont des hydrocarbures aromatiques et des composés hétéro-aromatiques de la famille des carbazoles. Les hydrocarbures aromatiques sont tout particulièrement le benzène, le toluène, le naphtalène, les dérivés biphényles, les benzyltoluènes dont les dibenzyltoluènes (DBT). Ils forment, sous leur forme hydrogénée, des alcanes cycliques. Ces composés ont l'avantage de posséder une plage importante de température pour leur mise en œuvre sous forme liquide, par exemple de -40°C à plus de 300°C pour le couple dibenzyltoluène/perhydrodibenzyltoluène. De plus, ces composés aromatiques, ainsi que leurs alcanes cycliques présentent une grande stabilité. Enfin, certains composés aromatiques comme le toluène sont produits mondialement à des échelles significatives (25 Mt/an pour le toluène) permettant d'envisager rapidement un développement de ce type de transport pour l'hydrogène. Leur hydrogénation est opérée à haute pression et température modérée (exemple du DBT : 40-80 bar, 180°C, -71 kJ/mo1H2) alors que la déshydrogénation est réalisée à pression atmosphérique et plus haute température (exemple du DBT : 1 bar, 300°C, 71 kJ/mo1H2). En ce qui concerne les composés hétéro-aromatiques de la famille des carbazoles, les composés les plus fréquents sont le N-éthylcarbazole (NEC) et les dérivés furanes, pyrroles et indoles. Dans ce cas, la réaction d'hydrogénation conduit à des amines cycliques ou des éthers cycliques.

Par ailleurs, des polyols ont été utilisés en tant que LOHC, libérant de l'hydrogène en formant des dérivés cétoniques ou des lactones.

US 2010/055513 A1 et US 2017/283257 A1 décrivent des liquides organiques porteurs de l'hydrogène comprenant au moins un alcool.

Toutefois, l'ensemble de ces composés ne donnent pas totalement satisfaction. Ainsi, les principaux catalyseurs performants utilisés lors des réactions d'hydrogénation et déshydrogénation des LOHC présentés ci-dessus sont à base de platine, iridium, rhodium, ruthénium ou palladium. Or, ces métaux sont peu disponibles sur la planète et, par conséquent très chers. Quelques alternatives utilisant des catalyseurs à base de nickel ont été proposées mais leur faible activité (300 à 3000 fois plus faible que des catalyseurs à base de ruthénium) est un obstacle à leur utilisation dans un contexte industriel. En outre, sont parfois utilisés des catalyseurs en phase homogène, ce qui ne permet pas de séparer facilement le catalyseur du milieu réactionnel.

En outre, la déshydrogénation des vecteurs LOHC riches en hydrogène conventionnels consomme au minimum 17% (NEC) à 25% (DBT) du pouvoir calorifique supérieur (PCS) de l'hydrogène libéré (en ne prenant en compte que l'enthalpie de réaction). Par conséquent, la recherche d'un procédé énergétiquement viable nécessite d'envisager une intégration thermique qui limite l'usage de ces composés. Dans le cas où cette intégration thermique ne serait pas opérée, le rendement énergétique des LOHC ne se démarquerait pas de celui d'autres solutions de transport comme l'hydrogène comprimé ou liquéfié.

Enfin, ces composés sont principalement obtenus à partir de ressources fossiles non renouvelables, qui s'épuisent comme mentionné plus haut. Par conséquent, l'hydrogène transporté par ces vecteurs ne peut pas être considéré comme parfaitement décarboné. L'invention a donc pour but de fournir de nouveaux liquides organiques hydrogénés aptes à générer par déshydrogénation catalytique des teneurs massiques et volumiques en hydrogène satisfaisantes voire supérieures à celles générées par certains LOHC conventionnels, dont au moins un des composés du couple LOHC déshydrogéné/LOHC hydrogéné est synthétisable à partir d'une ressource biosourcée, renouvelable, comme par exemple la lignine du bois.

Un autre but de l'invention et de proposer des procédés de déshydrogénation moins couteuses en énergie, notamment des mélanges de LOHC dont l'enthalpie de déshydrogénation est inférieure à 50 kJ/molH₂.

Encore un autre but de l'invention est de fournir de nouveaux liquides organiques hydrogénés pouvant être déshydrogénés par des réactions pouvant être au moins partiellement voire entièrement catalysées par des métaux plus disponibles, ce qui permet notamment de diminuer voire supprimer l'utilisation des catalyseurs à base de métaux nobles, et donc des économies.

Encore un autre but de l'invention est de proposer des mélanges de LOHC hydrogénés dont les correspondants déshydrogénés ont la capacité à s'hydrogéner catalytiquement et réversiblement, ainsi que des LOHC déshydrogénés ayant la capacité à s'hydrogéner catalytiquement et réversiblement en ces mélanges de LOHC hydrogénés.

Encore un autre but de l'invention est de proposer un procédé de déshydrogénation de ces mélanges de liquides organiques hydrogénés qui soit efficace, à haute conversion, et sélectif (pour éviter toute dégradation du LOHC, par exemple pour éviter des suroxydations) tout en utilisant moins voire pas de catalyseurs à base de métaux nobles.

Ainsi, selon un premier aspect, l'invention concerne une composition de liquides organiques porteurs d'hydrogène (LOHC) comprenant ou constituée de:
- au moins un premier composé de formule (I) suivante : 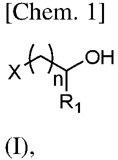 et
- au moins un deuxième composé de formule (II) ou (III) suivante : 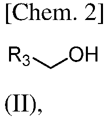 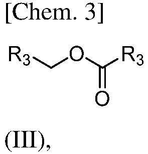 dans lesquelles :
   n est 0, 1, 2, 3 ou 4 ;
   R₁ est H, un groupe alkyle linéaire ou branché en C₁ à C₄, ou un groupe Y ;
   X est H, un groupe alkyle linéaire ou branché en C₁ à C₄, un groupe aryle perhydrogéné, ou un groupe hétéroaryle perhydrogéné, ledit groupe aryle ou hétéroaryle perhydrogéné étant optionnellement substitué par au moins un groupe R₂, indépendamment choisi parmi les groupes alkyle linéaires ou branchés en C₁ à C₄, les groupes O-alkyle linéaires ou branchés en C₁ à C₄, les groupes -NRₐR_{b}, avec Rₐ et R_{b} indépendamment choisis parmi les groupes alkyle linéaires ou branchés en C₁ à C₄ ;
   ou n=0, et X forme avec R₁ un groupe aryle perhydrogéné, ou un groupe hétéroaryle perhydrogéné ;
   Y est un groupe aryle perhydrogéné, ou un groupe hétéroaryle perhydrogéné, ledit groupe étant optionnellement substitué par au moins un groupe R₂, indépendamment choisi parmi les groupes alkyle linéaires ou branchés en C₁ à C₄, les groupes O-alkyle linéaires ou branchés en C₁ à C₄, les groupes -NRₐR_{b}, avec Rₐ et R_{b} indépendamment choisis parmi les groupes alkyle linéaires ou branchés en C₁ à C₄ ;
   R₃ est :
      - un groupe aryle perhydrogéné, ou un groupe hétéroaryle perhydrogéné ;
      - un groupe -R-Cy où R est un alcane diyle linéaire ou branché en C₁ à C₆ et Cy est un groupe aryle perhydrogéné, ou un groupe hétéroaryle perhydrogéné ; ou
      - un groupe alkyle linéaire ou branché en C₂ à C₆ substitué par au moins un groupe -OH ou un groupe -CH₂-OH ;
   ou lorsque le au moins premier composé de formule (I) comprend au moins un groupe aryle perhydrogéné ou hétéroaryle perhydrogéné :
      - H, ou un groupe alkyle linéaire ou branché en C₁ à C₆.

Cette composition peut être utilisée en tant que telle. Elle peut également être utilisée par l'intermédiaire d'un réservoir jumelé comprenant séparément le au moins un composé de formule (I) et le au moins un composé de formule (II) ou (III), ou de deux réservoirs comprenant respectivement le au moins un composé de formule (I) et le au moins un composé de formule (II) ou (III).
Selon un mode de réalisation particulier, R₁ est H.

Selon un mode de réalisation particulier, R₁ est H, et X est H ou un groupe alkyle linéaire ou branché en C₁ à C₄, n étant notamment égal à 0, le au moins premier composé de formule (I) étant en particulier MeOH.

Selon un mode de réalisation particulier, R₁ est H, et X est H, un groupe alkyle linéaire ou branché en C₁ à C₄, un groupe aryle perhydrogéné, ou un groupe hétéroaryle perhydrogéné, ledit groupe aryle ou hétéroaryle perhydrogéné étant optionnellement substitué par au moins un groupe R₂, indépendamment choisi parmi les groupes alkyle linéaires ou branchés en C₁ à C₄, les groupes O-alkyle linéaires ou branchés en C₁ à C₄, les groupes -NRₐR_{b}, avec Rₐ et R_{b} indépendamment choisis parmi les groupes alkyle linéaires ou branchés en C₁ à C₄.

Selon un mode de réalisation particulier, R₁ est un groupe alkyle linéaire ou branché en C₁ à C₄, ou un groupe Y, en particulier un groupe alkyle linéaire ou branché en C₁ à C₄.

Selon un mode de réalisation particulier, n=0, et X forme avec R1 un groupe aryle perhydrogéné, ou un groupe hétéroaryle perhydrogéné.

Selon un mode de réalisation particulier, R₃ est H ou un groupe alkyle linéaire ou branché en C₁ à C₆, notamment H.

Selon un mode de réalisation particulier, R₃ est un groupe alkyle linéaire ou branché en C₂ à C₆ substitué par au moins un groupe -OH ou un groupe -CH₂-OH, en particulier un groupe alkyle linéaire en C₂ à C₆ substitué par au moins un groupe -CH₂-OH, le deuxième composé étant de préférence choisi parmi 1,4-butanediol, 1,3-butanediol, 1,3-propanediol, 1,5-pentanediol, 1,4-pentanediol, 1,3-pentanediol, 2,4-pentanediol, et de manière encore plus préférée le 1,4-butanediol.
Selon un mode de réalisation particulier, R₃ est :
- un groupe aryle perhydrogéné, ou un groupe hétéroaryle perhydrogéné ; ou
- un groupe -R-Cy où R est un alcane diyle linéaire ou branché en C₁ à C₆ et Cy est un groupe aryle perhydrogéné, ou un groupe hétéroaryle perhydrogéné.

Selon un mode de réalisation particulier, la composition de l'invention comprend :
- au moins un premier composé de formule (I) suivante : 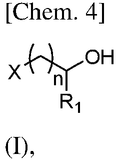 et
- au moins un deuxième composé de formule (II) ou (III) suivante : 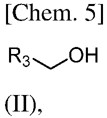 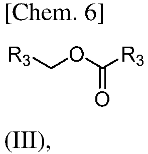 dans lesquelles :
   n=0, et X forme avec R₁ un groupe aryle perhydrogéné, ou un groupe hétéroaryle perhydrogéné ;
   R₃ est :
      - un groupe aryle perhydrogéné, ou un groupe hétéroaryle perhydrogéné ; ou
      - un groupe -R-Cy où R est un alcane diyle linéaire ou branché en C₁ à C₆ et Cy est un groupe aryle perhydrogéné, ou un groupe hétéroaryle perhydrogéné.

Selon un mode de réalisation particulier, la composition de l'invention comprend :
- au moins un premier composé de formule (I) suivante : 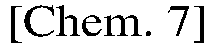 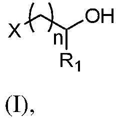 et
- au moins un deuxième composé de formule (II) ou (III) suivante : 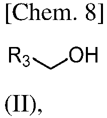 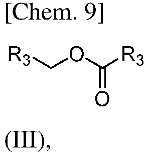 dans lesquelles :
   n=0, et X forme avec R₁ un groupe aryle perhydrogéné, ou un groupe hétéroaryle perhydrogéné ;
   R₃ est H, ou un groupe alkyle linéaire ou branché en C₁ à C₆.

Selon un mode de réalisation particulier, la composition de l'invention comprend :
- au moins un premier composé de formule (I) suivante : 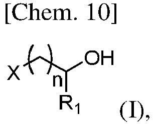 et
- au moins un deuxième composé de formule (II) ou (III) suivante : 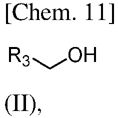 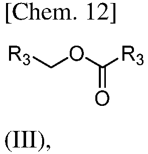 dans lesquelles :
   n est 0, 1, 2, 3 ou 4 ;
   R₁ est H, ou un groupe alkyle linéaire ou branché en C₁ à C₄ ;
   X est H, ou un groupe alkyle linéaire ou branché en C₁ à C₄ ;
   R₁ étant en particulier H, avec notamment n=0 et X=H ;
   R₃ est un groupe alkyle linéaire ou branché en C₂ à C₆ substitué par au moins un groupe -OH ou un groupe -CH₂-OH, en particulier un groupe alkyle linéaire en C₂ à C₆ substitué par au moins un groupe -OH ou un groupe -CH₂-OH, notamment un groupe -CH₂-OH, le deuxième composé étant de préférence choisi parmi 1,4-butanediol, 1,3-butanediol, 1,3-propanediol, 1,5-pentanediol, 1,4-pentanediol, 1,3-pentanediol, 2,4-pentanediol, et de manière encore plus préférée le 1,4-butanediol.

Selon un mode de réalisation particulier, la composition de l'invention comprend :
- au moins un premier composé de formule (I) suivante : 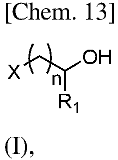 et
- au moins un deuxième composé de formule (II) ou (III) suivante : 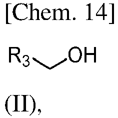 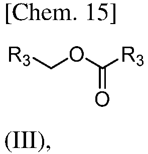 dans lesquelles :
   n est 0, 1, 2, 3 ou 4 ;
   R₁ est H,
   X est un groupe aryle perhydrogéné, ou un groupe hétéroaryle perhydrogéné, ledit groupe aryle ou hétéroaryle perhydrogéné étant optionnellement substitué par au moins un groupe R₂, indépendamment choisi parmi les groupes alkyle linéaires ou branchés en C₁ à C₄, les groupes O-alkyle linéaires ou branchés en C₁ à C₄, les groupes -NRₐR_{b}, avec Rₐ et R_{b} indépendamment choisis parmi les groupes alkyle linéaires ou branchés en C₁ à C₄ ;
   R₃ est H, ou un groupe alkyle linéaire ou branché en C₁ à C₆.

Selon un mode de réalisation particulier, la composition de l'invention comprend :
- au moins un premier composé de formule (I) suivante : 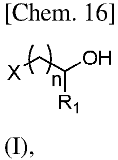 et
- au moins un deuxième composé de formule (II) ou (III) suivante : 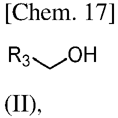 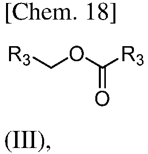 dans lesquelles :
   n est 0, 1, 2, 3 ou 4 ;
   R₁ est H, ou un groupe alkyle linéaire ou branché en C₁ à C₄ ;
   X est H, ou un groupe alkyle linéaire ou branché en C₁ à C₄ ;
   R₁ étant en particulier H, avec notamment n=0 et X=H ;
   R₃ est :
      - un groupe aryle perhydrogéné, ou un groupe hétéroaryle perhydrogéné ; ou
      - un groupe -R-Cy où R est un alcane diyle linéaire ou branché en C₁ à C₆ et Cy est un groupe aryle perhydrogéné, ou un groupe hétéroaryle perhydrogéné.

Selon un mode de réalisation particulier, la composition de l'invention est telle que:
- X est un groupe aryle perhydrogéné, X étant notamment un groupe cyclohexyle ; ou
- X est un groupe hétéroaryle perhydrogéné, X étant notamment choisi parmi les groupes pipéridinyle, pipérazinyle, hexahydropyrimidinyle, et hexahydropyridazinyle.

Selon un mode de réalisation particulier, n est 0, 1 ou 2.

Selon un mode de réalisation particulier, le au moins premier composé et le au moins deuxième composé sont respectivement :
- cyclohexanol, cyclohexylméthanol ;
- cyclohexanol, méthanol ;
- méthanol, 1,4-butanediol ;
- méthanol, 1,3-butanediol ;
- méthanol, 1,3-propanediol ;
- méthanol, 1,5-pentanediol;
- méthanol, 1,4-pentanediol;
- méthanol, 1,3-pentanediol;
- méthanol, 2,4-pentanediol;
- cyclohexyléthanol, méthanol ; ou méthanol, cyclohexyléthanol.

Le rapport molaire Rm entre la quantité du au moins un premier composé sur la quantité du au moins un deuxième composé est compris de 0,1 à 10, notamment de 0,8 à 1,25, en particulier de 0,9 à 1,1, par exemple 1.

Par exemple, lorsque R₃ est un groupe alkyle linéaire ou branché en C₂ à C₆ substitué par au moins un groupe -OH ou un groupe -CH₂-OH, Rm est notamment compris de 1 à 10, notamment de 1 à 1,25, en particulier de 1 à 1,1.

Par exemple, lorsque R₁ est différent de H, Rm est notamment compris de 0,1 à 1, notamment de 0,8 à 1, en particulier de 0,9 à 1.

L'invention concerne également une composition de liquides organiques porteurs d'hydrogène (LOHC) comprenant ou constituée de:
- au moins un premier composé de formule (I) suivante : 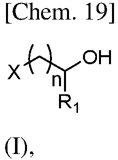 et
- au moins un deuxième composé de formule (II) ou (III) suivante : 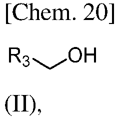 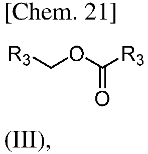 dans lesquelles :
   n est 0, 1, 2, 3 ou 4 ;
   R₁ est H, un groupe alkyle linéaire ou branché en C₁ à C₄, ou un groupe Y ;
   X est H, un groupe alkyle linéaire ou branché en C₁ à C₄, un groupe aryle perhydrogéné, ou un groupe hétéroaryle perhydrogéné, ledit groupe aryle ou hétéroaryle perhydrogéné étant optionnellement substitué par au moins un groupe R₂, indépendamment choisi parmi les groupes alkyle linéaires ou branchés en C₁ à C₄, les groupes O-alkyle linéaires ou branchés en C₁ à C₄, les groupes -NRₐR_{b}, avec Rₐ et R_{b} indépendamment choisis parmi les groupes alkyle linéaires ou branchés en C₁ à C₄ ;
   ou n=0, et X forme avec R₁ un groupe aryle perhydrogéné, ou un groupe hétéroaryle perhydrogéné ;
   Y est un groupe aryle perhydrogéné, ou un groupe hétéroaryle perhydrogéné, ledit groupe étant optionnellement substitué par au moins un groupe R₂, indépendamment choisi parmi les groupes alkyle linéaires ou branchés en C₁ à C₄, les groupes O-alkyle linéaires ou branchés en C₁ à C₄, les groupes -NRₐR_{b}, avec Rₐ et R_{b} indépendamment choisis parmi les groupes alkyle linéaires ou branchés en C₁ à C₄ ;
   R₃ est :
      - H, ou un groupe alkyle linéaire ou branché en C₁ à C₆ ;
      - un groupe aryle perhydrogéné, ou un groupe hétéroaryle perhydrogéné ;
      - un groupe -R-Cy où R est un alcane diyle linéaire ou branché en C₁ à C₆ et Cy est un groupe aryle perhydrogéné, ou un groupe hétéroaryle perhydrogéné ; ou
      - un groupe alkyle linéaire ou branché en C₂ à C₆ substitué par au moins un groupe -OH ou un groupe -CH₂-OH ;
   le au moins premier composé de formule (I) étant différent du au moins deuxième composé de formule (II).

Selon un autre aspect, l'invention concerne également l'utilisation d'une composition telle que définie ci-dessus, en tant que liquide organique porteur d'hydrogène (LOHC).

Tous les modes de réalisation mentionnés ci-dessus quant aux compositions peuvent également s'appliquer ici, seules ou en combinaison.

Selon un mode de réalisation particulier, l'invention concerne l'utilisation d'une composition telle que définie ci-dessus, en tant que LOHC pour le transport et le stockage de l'hydrogène. Cette composition peut être utilisée en tant que telle. Elle peut également être utilisée par l'intermédiaire d'un réservoir jumelé comprenant séparément le au moins un composé de formule (I) et le au moins un composé de formule (II) ou (III), ou de deux réservoirs comprenant respectivement le au moins un composé de formule (I) et le au moins un composé de formule (II) ou (III).

Lorsque se forment plus d'un LOHC déshydrogéné correspondant, les LOHC déshydrogénés sont généralement obtenus en mélange, et également utilisés en mélange pour la formation des LOHC hydrogénés correspondants. Alternativement, ces LOHC déshydrogénés peuvent être séparés, par exemple par distillation, avant leur utilisation pour former les LOHC hydrogénés correspondants.

De façon analogue, le mélange des LOHC hydrogénés obtenus peut être utilisé directement pour à nouveau former le ou les LOHC déshydrogéné(s) correspondant(s). Les LOHC hydrogénés peuvent également être séparés, par exemple par distillation, avant leur utilisation pour à nouveau former le ou les LOHC déshydrogéné(s) correspondant(s).

Selon un autre aspect, l'invention concerne également un couple (i) d'une composition de liquides organiques porteurs d'hydrogène (LOHC) tel que définie ci-dessus, et (ii) du ou des LOHC déshydrogéné(s) correspondant(s).

Le ou les LOHC déshydrogéné(s) correspondant(s) sont notamment de formule (IV) suivante :
❖ Lorsque R₁ est différent de H : 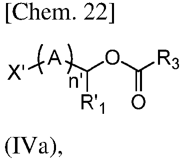
❖ Lorsque R₁ est H : 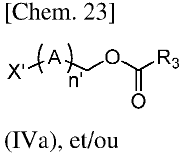 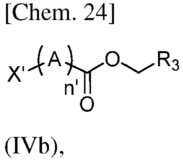
❖ Lorsque R₃ est substitué par un groupe -CH₂-OH : 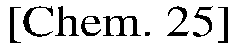 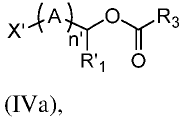 et/ou 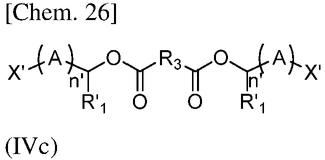 et/ou 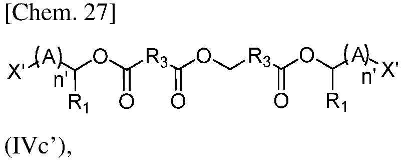
❖ Lorsque R₃ représente H : 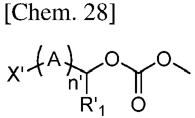 ou, en présence d'un composé additionnel R₄-OH, avec R₄ étant un groupe alkyle linéaire ou branché en C₂ à C₆, 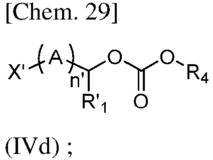 et/ou 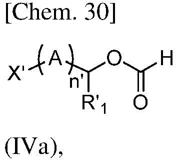
❖ Lorsque R₃ représente H, et R₁ est H : 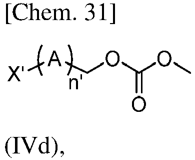 et/ou 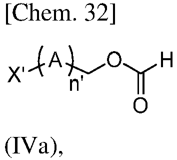 et/ou 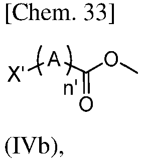 dans lesquelles :
   n est 0, 1, 2, 3 ou 4 ;
   R₁ est H, un groupe alkyle linéaire ou branché en C₁ à C₄, ou un groupe Y,
   X est le correspondant perhydrogéné du groupe aryle ou hétéroaryle X', optionnellement substitué par au moins un groupe R₂, indépendamment choisi parmi les groupes alkyle linéaires ou branchés en C₁ à C₄, les groupes O-alkyle linéaires ou branchés en C₁ à C₄, les groupes -NRₐR_{b}, avec Rₐ et R_{b} indépendamment choisis parmi les groupes alkyle linéaires ou branchés en C₁ à C₄ ;
   Y est le correspondant perhydrogéné du groupe aryle ou hétéroaryle Y', optionnellement substitué par au moins un groupe R₂, indépendamment choisi parmi les groupes alkyle linéaires ou branchés en C₁ à C₄, les groupes O-alkyle linéaires ou branchés en C₁ à C₄, les groupes -NRₐR_{b}, avec Rₐ et R_{b} indépendamment choisis parmi les groupes alkyle linéaires ou branchés en C₁ à C₄ ;
   A est -CH₂- et n' est n, ou A est -CH=CH- et n' est 1 ou 2,
   R' ₁ est R₁, lorsque R₁ est H ou un groupe alkyle linéaire ou branché en C₁ à C₄ ; ou un groupe Y',
   X' est un groupe aryle ou hétéroaryle, ledit groupe étant optionnellement substitué par au moins un groupe R₂, indépendamment choisi parmi les groupes alkyle linéaires ou branchés en C₁ à C₄, les groupes O-alkyle linéaires ou branchés en C₁ à C₄, les groupes -NRₐR_{b}, avec Rₐ et R_{b} indépendamment choisis parmi les groupes alkyle linéaires ou branchés en C₁ à C₄ ; Y' est un groupe aryle ou hétéroaryle, ledit groupe étant optionnellement substitué par au moins un groupe R₂, indépendamment choisi parmi les groupes alkyle linéaires ou branchés en C₁ à C₄, les groupes O-alkyle linéaires ou branchés en C₁ à C₄, les groupes -NRₐR_{b}, avec Rₐ et R_{b} indépendamment choisis parmi les groupes alkyle linéaires ou branchés en C₁ à C₄,
   R₃ est :
      - un groupe aryle perhydrogéné, ou un groupe hétéroaryle perhydrogéné ;
      - un groupe -R-Cy où R est un alcane diyle linéaire ou branché en C₁ à C₆ et Cy est un groupe aryle perhydrogéné, ou un groupe hétéroaryle perhydrogéné ; ou
      - un groupe alkyle linéaire ou branché en C₂ à C₆ substitué par au moins un groupe -OH ou un groupe -CH₂-OH ;
   ou lorsque le au moins premier composé de formule (I) comprend au moins un groupe aryle perhydrogéné ou hétéroaryle perhydrogéné :
      - H, ou un groupe alkyle linéaire ou branché en C₁ à C₆.

Ainsi, un composé de formule (IV) avec n'=1 correspond à un composé (I) avec n=2, et un composé de formule (IV) avec n'=2 correspond à un composé (I) avec n=4.

Tous les modes de réalisation mentionnés ci-dessus quant aux compositions peuvent également s'appliquer ici, seules ou en combinaison.

Les composés de formule (I), (II), (III), et/ou le ou les LOHC déshydrogéné(s) correspondant(s) ont notamment l'avantage de pouvoir être, pour l'essentiel, biosourcés. Par exemple, l'une des voies d'obtention de ces composés peut être relative au traitement de la lignine. Ce traitement peut être par oxydation (J. Zakzesk and al., Chem. Rev. 2010, 110, 3552-3599), par thermolyse (J. Zakzesk and al., Chem. Rev. 2010, 110, 3552-3599, M. P. Pandey and al., Chem. Eng. Technol. 2011, 34, No. 1, 29-41) par synthèses enzymatiques (R. Rahmanpour and al., Current Opinion in Chemical Biology 2015, 29:10-17), ou par catalyse photorédox (Qiong Lin et al., Transactions of Tianjin University 2020, 26, 325-340). Ils permettent d'obtenir des dérivés de type vaniline (benzaldéhyde) et des monolignols (cinnamaldéhyde), qui peuvent par exemple être par la suite convertis en acétophénone, benzaldéhyde et cinnamaldéhyde par réaction chimique de désoxygénation et déshydratation. Une autre voie possible de synthèse de ces composés peut être relative au cinnamaldéhyde. Ce produit est un composant majoritaire présent dans l'huile essentiel de Cassia et/ou de cannelle, écorce et feuille (Dayan Tao and al., J. For. Res. 27, 707-717 (2016); I.N. Jardim and al., J Pest Sci 91, 479-487 (2018), Y. Shih and al., Int. J. Mol. Sci. 2013, 14, 19186-19201). Il est aussi possible d'obtenir ce composé par synthèse enzymatique de la L-phénylalanine, acide aminé protéinogène (Bang et al., Microb Cell Fact (2016) 15:16, J.-Q. Kong RSC Adv., 2015, 5, 62587-62603, S. K. Nair and al., Structure23, 2032-2042, November 3, 2015).

Le cinnamaldéhyde, ainsi obtenu peut par exemple servir à synthétiser le benzaldéhyde (US4673766A, US4727058A). L'acide cinnamique, issu de l'oxydation du cinnamaldéhyde, peut conduire à l'acétophénone par action enzymatique de champignon de type Mucor (Zuohui Zhang and al., World J Microbiol Biotechnol (2011) 27:2133-2137).

Des alcools de l'invention peuvent également être obtenus par crackage thermique de triglycérides d'huiles végétales ou animales (Wiggers V. R. et al., Frontiers in Bioenergy and Biofuels, edited by Eduardo Jacob-Lopes and Leila Queiroz Zepka).

Des alcools de l'invention peuvent également être obtenus par exemple par fermentation de lignocellulose (Schubert, T., Biofuels, Bioprod. Bioref. 2020, 14, 845-878).

Les compositions de l'invention, hydrogénées, sont aptes à être déshydrogénées pour produire, outre le ou les LOHC déshydrogéné(s) correspondant(s), de l'hydrogène.

Lesdits LOHC déshydrogénés correspondants, sont en retour aptes à régénérer par hydrogénation catalytique les compositions selon l'invention.

Selon un mode de réalisation particulier, le couple selon l'invention est choisi parmi les couples suivants :
- cyclohexanol, cyclohexylméthanol / benzoate de phényle;
- cyclohexanol, méthanol / méthyl-phénylformate et/ou méthyl-phénylcarbonate;
- méthanol, 1,4-butanediol / diméthylsuccinate;
- méthanol, 1,3-propanediol / méthyldiesterpropanoate;
- méthanol, 1,5-pentanediol / méthyldiesterpentanoate;
- cyclohexyléthanol, méthanol / méthyl-1-phényléthylformate et/ou méthyl-1-phényléthylcarbonate.

Selon un autre aspect, l'invention concerne également un procédé de génération d'hydrogène comprenant au moins une étape de déshydrogénation catalytique d'une composition telle que définie précédemment.

Selon un mode de réalisation, la au moins une étape de déshydrogénation est effectuée en présence d'un ou plusieurs catalyseurs à base de cuivre, de ruthénium, de manganèse, de molybdène, de nickel, d'iridium, et/ou de fer.

Le ou lesdits catalyseurs sont notamment ceux sur des oxydes, notamment métalliques, en particulier de Ce, Al, Zn, Mg, Zr, Zn, V, Cr, Sn, Ti, Si, et leurs mélanges, plus particulièrement des oxydes ternaires ou quaternaires ; sur des minerais tels que l'hydrolactite ou l'hydroxyapatite ; sur des composés soufrés ; sur du nitrure de bore, en particulier hexagonal (hBN) ; ou sur un support carboné, par exemple du graphène (réduit ou non) ou du charbon actif (C). Des catalyseurs homogènes pinces à base de Ru, Rh, Ir, Fe, Mn peuvent également être greffés sur des oxydes métalliques et servir de catalyseurs à la réaction.

Selon un mode de réalisation particulier, le ou lesdits catalyseurs sont sur SiO₂, Al₂O₃, MgO, ZrO₂, ZnO, CeO₂, TiO₂, C, ou hBN. Selon un mode de réalisation plus particulier, ladite première étape de déshydrogénation en présence d'un ou plusieurs catalyseurs choisis parmi les catalyseurs à base de cuivre ou de nickel, par exemple les catalyseurs Cu/ZnO/Al₂O₃/MgO, Cu/CeO₂, Cu/ZrO₂, Cu/MgO, Ni/Al₂O₃, Cu/C, et Cu/hBN.

Selon un mode de réalisation, R₁ est H, et la au moins une étape de déshydrogénation est effectuée en présence d'un ou plusieurs catalyseurs à base de ruthénium et/ou de manganèse. Selon un mode de réalisation, R₁ est différent de H, et la au moins une étape de déshydrogénation est effectuée en présence d'un ou plusieurs catalyseurs à base de cuivre, de ruthénium, de manganèse, de molybdène, de nickel et/ou d'iridium.

Selon un mode de réalisation particulier, le procédé selon la présente invention comprend une première étape de déshydrogénation en présence d'un ou plusieurs catalyseurs à base de Ni, Co, Cu, Ru, Rh, Mn, Ag, Pd, Ir, Zr, Mo, W, Cr. Fe, Mn, Re, et leurs mélanges, en particulier Cu, puis une deuxième étape de déshydrogénation en présence d'un ou plusieurs catalyseurs à base de platine, de palladium, d'iridium, de rhodium, de ruthénium, de nickel, ou de leurs mélanges.

Selon un mode de réalisation plus particulier, ladite première étape de déshydrogénation en présence d'un ou plusieurs catalyseurs choisis parmi les catalyseurs à base de Ni, Co, Cu, Ru, Ag, Pd, Ir, Zr, Mo, W, Cr, Fe, Mn, Re, et leurs mélanges, notamment Cu, Co, Fe, Mn, Ni, Ag, et leurs mélanges, en particulier Cu.

Selon un mode de réalisation plus particulier, ladite deuxième étape de déshydrogénation en présence d'un ou plusieurs catalyseurs choisis parmi les catalyseurs à base de platine, de palladium, de ruthénium, ou de nickel.

Selon un mode de réalisation plus particulier, ladite deuxième étape de déshydrogénation en présence d'un ou plusieurs catalyseurs choisis parmi les catalyseurs Pt/Al₂O₃, Pd/Al₂O₃, Pt/C, Pt/CeO₂, Pt/MgO, Pt/ZrO₂, Ru/Al₂O₃, Pd/C, Ru/C, Pt/hBN, et Ni/Al₂O₃.

Selon un mode de réalisation particulier, la au moins une étape de déshydrogénation est effectuée dans un réacteur de type batch, semi-batch ou continu.

De manière générale, la composition selon l'invention est préchauffée à la température de la réaction, et en particulier injecté dans un réacteur. A la sortie du réacteur, les liquides produits sont séparés de l'hydrogène par séparation gaz/liquide.

Selon un mode de réalisation particulier, la au moins une étape de déshydrogénation est effectuée à une température comprise de 80 à 320°C, et/ou à une pression comprise de 0,8 à 2 bar.

Selon un autre aspect, l'invention concerne également un procédé de régénération d'une composition telle que définie ci-dessus, le procédé comprenant une étape d'hydrogénation catalytique, notamment d'un ou plusieurs composés de formule (IV) tels que définis précédemment.

Cette étape peut être effectuée :
- en présence d'un mélange de catalyseurs, comprenant :
   ∘ un catalyseur choisi parmi les catalyseurs à base de Ni, Co, Cu, Ru, Ag, Pd, Pt, Au, Ni, et/ou Mo, en particulier supportés sur des oxydes métalliques telles que SiO₂, Al₂O₃, MgO, ZrO₂, ZnO, CeO₂, FeOx et/ou graphite ; et des catalyseurs homogènes pinces à base de Ru, Pd, Pt, Au, Ir, Fe, Rh, en particulier greffés sur des oxydes métalliques ; et
   ∘ Un catalyseur à base de Pt, Pd, Ni, Ru, Rh, Ir, en particulier supportés sur des oxydes métalliques tels que SiO₂, Al₂O₃ ou sur graphite ;
- en présence d'un catalyseur à base de Pt ou Ni-Cr.

Généralement, le ou les composés déshydrogénés, en particulier le ou les composés de formule (IV), sont préchauffés au sein d'un réacteur, à une température pouvant varier de 100°C à 260°C, puis mélangés à l'hydrogène à la pression de la réaction et l'ensemble est injecté dans un réacteur lit fixe, chargé en catalyseur.

L'hydrogène et le ou les composés déshydrogénés, en particulier le ou les composés de formule (IV), peuvent également être alimentés directement séparément dans le réacteur. Cette réduction est exothermique, et est donc favorisée par l'utilisation de réacteurs isothermes, limitant les inhomogénéités de température.

Par ailleurs, l'énergie dégagée par la réaction sous forme de chaleur peut être avantageusement utilisée pour préchauffer les réactifs.

A la sortie du réacteur, les liquides produits sont séparés de l'hydrogène non réagi par une séparation gaz/liquide.

Les procédés peuvent être opérés en réacteurs batch ou semi-batch voire en continu dans des réacteurs de type « slurry », « trickle bed », lit fluidisé ou lit fixe.

D'une manière générale la réaction d'hydrogénation est réalisée à une température variant de 100 à 300°C, de préférence de 100 à 260°C.

La pression peut varier de 10 à 280 bar (ou 1 à 28 MPa).

Bien entendu, le couple pression/température peut être ajusté selon la nature du couple LOHC déshydrogéné/LOHC hydrogéné. Le choix du catalyseur est généralement réalisé en tenant compte de la nature du couple LOHC déshydrogéné(s)/ LOHC hydrogéné(s) considéré.

Selon un autre aspect, l'invention concerne un procédé pour transporter et/ou stocker de l'hydrogène caractérisé en ce qu'il met en œuvre au moins une composition telle que définie ci-dessus.

Les compositions selon l'invention peuvent être utilisés notamment dans des dispositifs de conversion d'énergie électrochimique ou par combustion ou dans des procédés d'hydrogénation à titre de source renouvelable en hydrogène ou bien encore à titre de carburant.

Selon un autre de ses aspects, la présente invention se rapporte à l'utilisation notamment dans des dispositifs de conversion d'énergie électrochimique ou par combustion, d'au moins une composition selon l'invention.

L'ensemble des composés considérés selon l'invention sont des liquides organiques connus et déjà utilisés en tant que solvants en chimie fine. Ainsi les infrastructures pour les transporter existent déjà.

Par ailleurs, il s'agit de composés stables dans les conditions normales de température et de pression, ce qui permet d'envisager leur transport dans des containers standards ou citernes qui peuvent être chargés sur des bateaux, trains ou camions en fonction des contextes.

Les applications directes d'une composition selon l'invention sont le transport et le stockage d'hydrogène.

La composition selon l'invention peut être transporté et stocké jusqu'au lieu d'utilisation de l'hydrogène, puis transformé par déshydrogénation en un LOHC déshydrogéné, notamment un ou plusieurs composés de formule (IV) et en hydrogène.

L'hydrogène produit peut alors être utilisé en tant que réactif dans un procédé industriel (hydrodésulfuration, hydrogénation de différents composés, valorisation du CO₂ en carburants gazeux ou liquides ...).

L'hydrogène produit peut également être utilisé en tant que vecteur énergétique décarboné soit par combustion soit en alimentant un dispositif de conversion d'énergie électrochimique.

De plus, les propriétés liquides de ces composés organiques en font de bons candidats pour être utilisés en tant que carburants pour des moteurs thermiques ou des dispositifs de conversion d'énergie électrochimiques.

Ils sont compatibles avec un conditionnement dans le réservoir d'un véhicule où la déshydrogénation peut être réalisée afin de produire de l'hydrogène alimentant le véhicule. Une fois déshydrogéné, le LOHC peut être stocké pour être ultérieurement déchargé en échange d'un LOHC hydrogéné conforme à l'invention.

### Définitions

Tel qu'on l'entend ici, les plages de valeur sous forme de « x-y » ou « de x à y » ou « entre x et y » incluent les bornes x et y ainsi que les entiers compris entre ces bornes. A titre d'exemple, « 1-5 », ou « de 1 à 5 » ou « entre 1 et 5 » désignent les entiers 1, 2, 3, 4 et 5. Les modes de réalisations préférés incluent chaque entier pris individuellement dans la plage de valeur, ainsi que toute sous-combinaison de ces entiers. A titre d'exemple, les valeurs préférées pour « 1-5 » peuvent comprendre les entiers 1, 2, 3, 4, 5, 1-2, 1-3, 1-4, 1-5, 2-3, 2-4, 2-5, etc.

Tel qu'il est utilisé ici, le terme "alkyle" désigne un groupe alkyle à chaîne linéaire ou ramifiée, en particulier linéaire, ayant le nombre d'atomes de carbone indiqué avant ledit terme, notamment 1 à 4 atomes de carbone, tel que méthyle, éthyle, propyle, isopropyle, butyle, isobutyle, sec-butyle, tert-butyle, etc. Ainsi, une expression telle que "alkyle en C1-C4" désigne un radical alkyle contenant de 1 à 4 atomes de carbone. Il en est de même pour le terme « alcane ».

Tel qu'utilisé ici, le terme "arène" désigne un système cyclique aromatique hydrocarboné mono- ou bicyclique, substitué ou non substitué, ayant 6 à 10 atomes de carbone dans le cycle. Les exemples incluent le benzène et le naphtalène. Les arènes préférés comprennent le benzène et le naphtalène non substitués ou substitués. Sont inclus dans la définition d'"arène" les systèmes cycliques condensés, y compris, par exemple, les systèmes cycliques dans lesquels un cycle aromatique est condensé à un cycle cycloalkyle. Les exemples de tels systèmes cycliques condensés comprennent, par exemple, l'indane, l'indène et le tétrahydronaphtalène.

Tel qu'il est utilisé ici, le terme "hétéroarène" désigne un système aromatique cyclique contenant 5 à 10 atomes de carbone dans lequel un ou plusieurs atomes de carbone du cycle sont remplacés par au moins un hétéroatome tel que -O-, -N- ou -S-, en particulier -N- et/ou - O-. Les exemples d'hétéroarènes comprennent pyrrole, furane, thiophène, pyrazole, imidazole, thiazole, isothiazole, isoxazole, oxazole, oxathiol, oxadiazole, triazole, oxatriazole, furazane, tétrazole, pyridine, pyrazine, pyrimidine, pyridazine, triazine, indole, isoindole, indazole, benzofurane, isobenzofurane, purine, quinazoline, quinoline, isoquinoline, benzoimidazole, benzothiazole, benzothiophène, thianaphtène, benzoxazole, benzisoxazole, cinnoline, phtalazine, naphtyridine et quinoxaline. Sont inclus dans la définition d'"hétéroarène" les systèmes cycliques condensés, y compris, par exemple, les systèmes cycliques dans lesquels un cycle aromatique est condensé à un cycle hétérocycloalkyle. Les exemples de tels systèmes cycliques fusionnés comprennent, par exemple, le phtalamide, l'anhydride phtalique, l'indoline, l'isoindoline, la tétrahydroisoquinoline, le chromane, l'isochromane, le chromène et l'isochromène.

### FIGURES

La figure 1 illustre un cycle correspondant à la composition 1,4-butanediol/méthanol de l'invention, selon l'exemple 4.
La figure 2 illustre un cycle correspondant à la composition cyclohexyléthanol/méthanol de l'invention, selon l'exemple 4.
La figure 3 illustre un cycle correspondant à la composition cyclohexanol/méthanol de l'invention, selon l'exemple 4.
La figure 4 correspond à un chromatogramme GC-MS relatif à l'étude du mélange gamma-butyrolactone / méthanol décrit à l'exemple 5.

### EXEMPLES

Les exemples 1 et 2 ont été réalisés en utilisant du 1-octanol. Ils ont également été réalisés avec succès en utilisant du méthanol à la place du 1-octanol.

### Exemple 1 : obtention d'un ester croisé à partir d'alcool benzylique et de 1-octanol

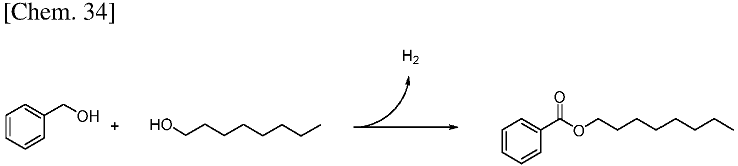

60 mL d'alcool benzylique et 60 mL 1-octanol sont mélangés avec 4 g de catalyseur Cu/ZnO/Al₂O₃/MgO. Le milieu réactionnel est purgé sous azote, puis chauffé à 180 °C pendant 4 h. Le milieu est ouvert en haut de réfrigérant pour laisser sortir l'hydrogène formé durant la réaction. Le brut du milieu réactionnel est analysé par GC-MS en fin de réaction, illustrant l'obtention dudit ester croisé.

### Exemple 2 : obtention d'un ester croisé à partir de gamma-butyrolactone et de 1-octanol

La gamma-butyrolactone, produit intermédiaire dans le cycle catalytique présenté à l'exemple 4, est utilisé dans cet exemple comme produit de départ pour la réaction d'estérification croisée.

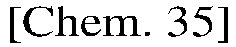

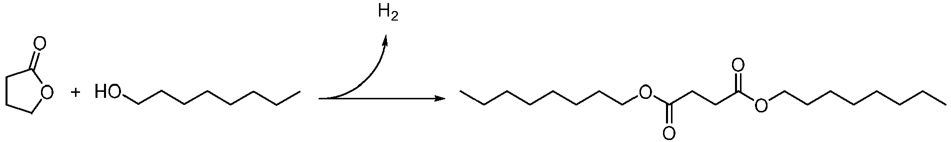

40 mL de gamma-butyrolactone et 80 mL de 1-octanol sont mélangés avec 4 g de catalyseur Cu/ZnO/Al2O3/MgO. Le milieu réactionnel est purgé sous azote, puis chauffé à 180 °C pendant 4 h. Le milieu est ouvert en haut de réfrigérant pour laisser sortir l'hydrogène formé durant la réaction. Le brut du milieu réactionnel est analysé par GC-MS en fin de réaction, illustrant l'obtention dudit ester croisé.

### Exemple 3 : Etude du pourcentage massique en hydrogène d'un système de l'invention

La déshydrogénation d'un mélange cyclohexylméthanol/cyclohexanol, comme suit a été étudiée :

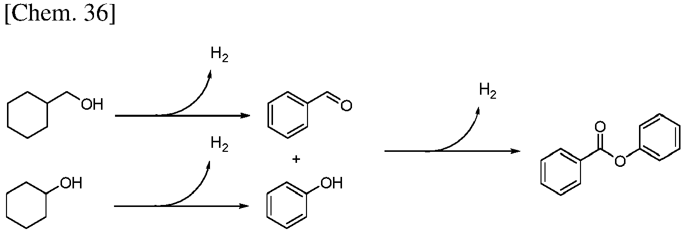

Le pourcentage massique en hydrogène d'une composition cyclohexylméthanol/cyclohexanol de l'invention a été mesuré et comparé au cyclohexylméthanol seul, hors invention.

**[Table 1]**

| LOHC hydrogéné | LOHC déshydrogéné | Pourcentage massique |
|---|---|---|
| Cyclohexylméthanol | Benzaldéhyde | 6.5% |
| Cvclohexvlméthanol + Cyclohexanol | Benzoate de phényle | 7.5% |

La composition selon l'invention permet ainsi d'augmenter le stockage massique en hydrogène.

### Exemple 4 : Etude de cycles de l'invention

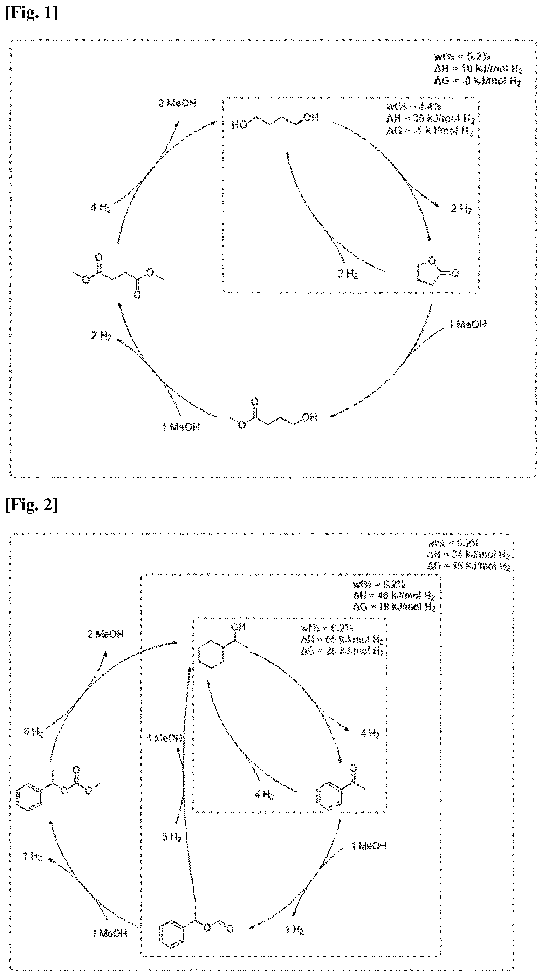

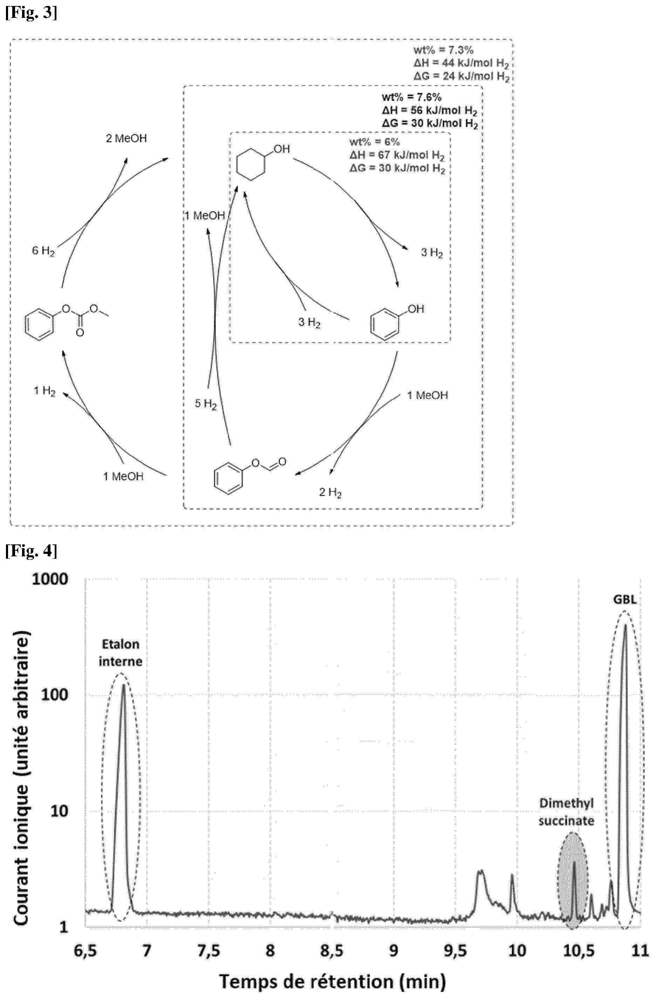

Des cycles relatifs à des compositions de l'invention ont été étudiés : des caractéristiques de ces systèmes, tels que le pourcentage massique en hydrogène ou l'enthalpie de déshydrogénation, ont été mesurées (figures 1, 2 et 3) en phase gaz.

Il s'avère que les cycles correspondant à l'invention (encadrés par les 2 rectangles en pointillés les plus à l'extérieur) permettent par rapport au cycle hors invention (encadré par le rectangle en pointillés le plus à l'intérieur), une augmentation du stockage massique en hydrogène et/ou une baisse de l'enthalpie de déshydrogénation.

### Exemple 5 : Etude d'un système GBL/MeOH selon l'invention

La gamma-butyrolactone, produit intermédiaire dans le cycle catalytique présenté à l'exemple 4 (figure 1), est utilisé dans cet exemple comme produit de départ et étudié en phase vapeur dans une réaction d'estérification croisée avec du méthanol (figure 1).

Pour ce faire, 23,6g de gamma-butyrolactone (GBL) et 26,4g de méthanol (dans un ratio molaire MeOH/GBL de 3) sont mélangés avec 250mg de catalyseur CuO(63,8%m) / ZnO(24,6%m) / Al₂O₃(9,9%m) / MgO(1,4%m).

Un four dont la température est de 360°C (température (catalyseur) = 260°C) est alimenté en LOHC à raison de 15 g/h.

Le brut du milieu réactionnel a été analysé par GC-MS en sortie, illustrant l'obtention dudit ester croisé, le diméthyl succinate (DMS). La conversion en GBL a été de 1%, pour un sélectivité en DMS supérieure à 95%.

## Revendications

1. Composition de liquides organiques porteurs d'hydrogène (LOHC) comprenant :
- au moins un premier composé de formule (I) suivante : 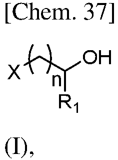 et
- au moins un deuxième composé de formule (II) ou (III) suivante : 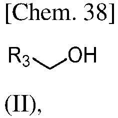 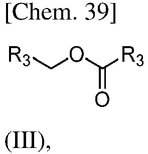 dans lesquelles :
n est 0, 1, 2, 3 ou 4 ;
R₁ est H, un groupe alkyle linéaire ou branché en C₁ à C₄, ou un groupe Y ;
X est H, un groupe alkyle linéaire ou branché en C₁ à C₄, un groupe aryle perhydrogéné, ou un groupe hétéroaryle perhydrogéné, ledit groupe aryle ou hétéroaryle perhydrogéné étant optionnellement substitué par au moins un groupe R₂, indépendamment choisi parmi les groupes alkyle linéaires ou branchés en C₁ à C₄, les groupes O-alkyle linéaires ou branchés en C₁ à C₄, les groupes -NRₐR_{b}, avec Rₐ et R_{b} indépendamment choisis parmi les groupes alkyle linéaires ou branchés en C₁ à C₄ ;
ou n=0, et X forme avec R₁ un groupe aryle perhydrogéné, ou un groupe hétéroaryle perhydrogéné ;
Y est un groupe aryle perhydrogéné, ou un groupe hétéroaryle perhydrogéné, ledit groupe étant optionnellement substitué par au moins un groupe R₂, indépendamment choisi parmi les groupes alkyle linéaires ou branchés en C₁ à C₄, les groupes O-alkyle linéaires ou branchés en C₁ à C₄, les groupes -NRₐR_{b}, avec Rₐ et R_{b} indépendamment choisis parmi les groupes alkyle linéaires ou branchés en C₁ à C₄ ;
R₃ est :
- un groupe aryle perhydrogéné, ou un groupe hétéroaryle perhydrogéné ;
- un groupe -R-Cy où R est un alcane diyle linéaire ou branché en C₁ à C₆ et Cy est un groupe aryle perhydrogéné, ou un groupe hétéroaryle perhydrogéné ; ou
- un groupe alkyle linéaire ou branché en C₂ à C₆ substitué par au moins un groupe -OH ou un groupe -CH₂-OH ;
ou lorsque le au moins premier composé de formule (I) comprend au moins un groupe aryle perhydrogéné ou hétéroaryle perhydrogéné :
- H, ou un groupe alkyle linéaire ou branché en C₁ à C₆.

2. Composition selon la revendication 1, dans laquelle :
- X est un groupe aryle perhydrogéné, X étant notamment un groupe cyclohexyle ; ou
- X est un groupe hétéroaryle perhydrogéné, X étant notamment choisi parmi les groupes pipéridinyle, pipérazinyle, hexahydropyrimidinyle, et hexahydropyridazinyle.

3. Composition selon l'une quelconque des revendications précédentes, dans laquelle n est 0, 1 ou 2.

4. Composition selon la revendication 1, dans laquelle le au moins premier composé et le au moins deuxième composé sont respectivement :
- cyclohexanol, cyclohexylméthanol ;
- cyclohexanol, méthanol ;
- méthanol, 1,4-butanediol ;
- méthanol, 1,3-butanediol ;
- méthanol, 1,3-propanediol ;
- méthanol, 1,5-pentanediol;
- méthanol, 1,4-pentanediol;
- méthanol, 1,3-pentanediol;
- méthanol, 2,4-pentanediol;
- cyclohexyléthanol, méthanol ; ou méthanol, cyclohexyléthanol.

5. Utilisation d'une composition selon la revendication 1, en tant que liquide organique porteur d'hydrogène (LOHC).

6. Couple (i) d'une composition de liquides organiques porteurs d'hydrogène (LOHC) tel que défini dans la revendication 1, et (ii) du ou des LOHC déshydrogéné(s) correspondant(s).

7. Procédé de génération d'hydrogène comprenant au moins une étape de déshydrogénation catalytique d'une composition selon la revendication 1.

8. Procédé selon la revendication 7, dans lequel la au moins une étape de déshydrogénation est effectuée en présence d'un ou plusieurs catalyseurs à base de cuivre, de ruthénium, de manganèse, de molybdène, de nickel, d'iridium et/ou de fer.

9. Procédé selon l'une quelconque des revendications 7 à 8, dans lequel la au moins une étape de déshydrogénation est effectuée dans un réacteur, notamment dans un réacteur comprenant le catalyseur en lit fixe et /ou dans un réacteur de type batch, semi-batch ou continu.

10. Procédé selon l'une quelconque des revendications 7 à 9, dans lequel la au moins une étape de déshydrogénation est effectuée à une température comprise de 80 à 320°C, et/ou à une pression comprise de 0,8 à 2 bar.

## Patentansprüche

1. Zusammensetzung organischer Wasserstoffträgerflüssigkeiten (LOHC), umfassend:
- mindestens eine erste Verbindung der folgenden Formel (I): 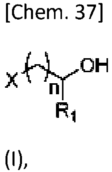 und
- mindestens eine zweite Verbindung der folgenden Formel (II) oder (III): 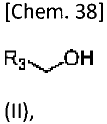 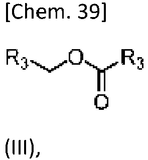 wobei:
n 0, 1, 2, 3 oder 4 beträgt;
R₁ H, eine lineare oder verzweigte C₁- bis C₄-Alkylgruppe oder eine Gruppe Y ist;
X H, eine lineare oder verzweigte C₁- bis C₄-Alkylgruppe, eine perhydrierte Arylgruppe oder eine perhydrierte Heteroarylgruppe ist, wobei die perhydrierte Aryloder Heteroarylgruppe optional durch mindestens eine R₂-Gruppe substituiert ist, unabhängig ausgewählt aus linearen oder verzweigten C₁- bis C₄-Alkylgruppen, linearen oder verzweigten C₁- bis C₄-O-Alkylgruppen, -NRₐR_{b}-Gruppen, mit Rₐ und R_{b} unabhängig ausgewählt aus linearen oder verzweigten C₁- bis C₄-Alkylgruppen;
oder n = 0, und X mit R₁ eine perhydrierte Arylgruppe oder eine perhydrierte Heteroarylgruppe bildet;
Y eine perhydrierte Arylgruppe oder eine perhydrierte Heteroarylgruppe ist, wobei die Gruppe optional durch mindestens eine R₂-Gruppe substituiert ist, unabhängig ausgewählt aus linearen oder verzweigten C₁- bis C₄-Alkylgruppen, linearen oder verzweigten C₁- bis C₄-O-Alkylgruppen, -NRₐR_{b}-Gruppen, mit Rₐ und R_{b} unabhängig ausgewählt aus linearen oder verzweigten C₁- bis C₄-Alkylgruppen;
R₃ Folgendes ist:
- eine perhydrierte Arylgruppe oder eine perhydrierte Heteroarylgruppe;
- eine -R-Cy-Gruppe, wobei R ein lineares oder verzweigtes C₁- bis C₆-Alkandiyl ist und Cy eine perhydrierte Arylgruppe oder eine perhydrierte Heteroarylgruppe ist; oder
- eine lineare oder verzweigte C₂- bis C₆-Alkylgruppe, substituiert durch mindestens eine OH-Gruppe oder eine -CH₂-OH-Gruppe;
oder, wenn die mindestens eine Verbindung der Formel (I) mindestens eine perhydrierte Arylgruppe oder perhydrierte Heteroarylgruppe umfasst:
- H oder eine lineare oder verzweigte C₁- bis C₆-Alkylgruppe.

2. Zusammensetzung nach Anspruch 1, wobei:
- X eine perhydrierte Arylgruppe ist, wobei X insbesondere eine Cyclohexylgruppe ist; oder
- X eine perhydrierte Heteroarylgruppe ist, wobei X insbesondere ausgewählt ist aus Piperidinyl-, Piperazinyl-, Hexahydropyrimidinyl- und Hexahydropyridazinylgruppen.

3. Verbindung nach einem der vorstehenden Ansprüche, wobei n 0, 1 oder 2 beträgt.

4. Verbindung nach Anspruch 1, wobei die mindestens erste Verbindung und die mindestens zweite Verbindung jeweils Folgendes sind:
- Cyclohexanol, Cyclohexylmethanol;
- Cyclohexanol, Methanol;
- Methanol, 1,4-Butandiol;
- Methanol, 1,3-Butandiol;
- Methanol, 1,3-Propandiol;
- Methanol, 1,5-Pentandiol;
- Methanol, 1,4-Pentandiol;
- Methanol, 1,3-Pentandiol;
- Methanol, 2,4-Pentandiol;
- Cyclohexylethanol, Methanol; oder Methanol, Cyclohexylethanol.

5. Verwendung einer Zusammensetzung nach Anspruch 1 als organische Wasserstoffträgerflüssigkeit (LOHC).

6. Paar von (i) einer Zusammensetzung von organischen Wasserstoffträgerflüssigkeiten (LOHC) wie in Anspruch 1 definiert und (ii) entsprechender/entsprechenden deyhdrierter/dehydrierten LOHC.

7. Verfahren zur Erzeugung von Wasserstoff, umfassend mindestens einen katalytischen Dehydrierungsschritt einer Zusammensetzung nach Anspruch 1.

8. Verfahren nach Anspruch 7, wobei der mindestens eine Dehydrierungsschritt in Anwesenheit eines oder mehrerer Katalysatoren auf Basis von Kupfer, Ruthenium, Mangan, Molybdän, Nickel, Iridium und/oder Eisen durchgeführt wird.

9. Verfahren nach einem der Ansprüche 7 bis 8, wobei der mindestens eine Dehydrierungsschritt in einem Reaktor, insbesondere einem Reaktor, der den Katalysator im Festbett umfasst und/oder in einem Reaktor vom Batch-, Semibatch- oder kontinuierlichen Typ, durchgeführt wird.

10. Verfahren nach einem der Ansprüche 7 bis 9, wobei der mindestens eine Dehydrierungsschritt bei einer Temperatur zwischen 80 bis 320 °C und/oder bei einem Druck zwischen 0,8 bis 2 bar durchgeführt wird.

## Claims

1. A liquid organic hydrogen carriers (LOHC) composition comprising:
- at least one first compound of the following formula (I): 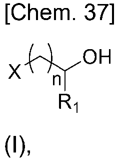 And
- at least one second compound of the following formula (II) or (III): 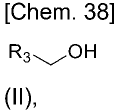 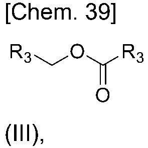 wherein:
n is 0, 1, 2, 3, or 4;
R₁ is H, a linear or branched C₁ to C₄ alkyl group, or a group Y;
X is H, a linear or branched C₁ to C₄ alkyl group, a perhydrogenated aryl group, or a perhydrogenated heteroaryl group, said perhydrogenated aryl or heteroaryl group being optionally substituted by at least one group R₂, independently selected from the linear or branched C₁ to C₄, the linear or branched O-alkyl groups with C₁ to C₄, -NRₐR_{b} groups, with Rₐ and R_{b} independently selected from the linear or branched alkyl groups with C₁ to C₄;
or n=0, and X forms with R₁ a perhydrogenated aryl group, or a perhydrogenated heteroaryl group;
Y is a perhydrogenated aryl group, or a perhydrogenated heteroaryl group, said group being optionally substituted by at least one group R₂ , independently selected from linear or branched C₁ to C₄, the linear or branched O-alkyl groups with C₁ to C₄, -NRₐR_{b} groups, with Rₐ and R_{b} independently selected from linear or branched alkyl groups with C₁ to C₄;
R₃ is:
- a perhydrogenated aryl group, or a perhydrogenated heteroaryl group;
- a group -R-Cy where R is a linear or branched C₁ to C₆ alkanediyle and Cy is a perhydrogenated aryl group, or a perhydrogenated heteroaryl group; or
- a linear or branched C₂ to C₆ alkyl group substituted by at least one -OH group or one -CH₂OH group;
or when said at least first compound of formula (I) comprises at least one perhydrogenated aryl or perhydrogenated heteroaryl group:
- H, or a linear or branched C₁ to C₆ alkyl group.

2. The composition according to claim 1, wherein:
- X is a perhydrogenated aryl group, X being in particular a cyclohexyl group; or
- X is a perhydrogenated heteroaryl group, X being in particular selected from piperidinyl, piperazinyl, hexahydropyrimidinyl, and hexahydropyridazinyl groups.

3. The composition according to any one of the preceding claims, wherein n is 0, 1, or 2.

4. The composition according to claim 1, wherein said at least first compound and said at least second compound are respectively:
- cyclohexanol, cyclohexylmethanol;
- cyclohexanol, methanol;
- methanol, 1,4-butanediol;
- methanol, 1,3-butanediol;
- methanol, 1,3-propanediol;
- methanol, 1,5-pentanediol;
- methanol, 1,4-pentanediol;
- methanol, 1,3-pentanediol;
- methanol, 2,4-pentanediol;
- cyclohexylethanol, methanol; or methanol, cyclohexylethanol.

5. A use of a composition according to claim 1 as a liquid organic hydrogen carrier (LOHC).

6. A pair (i) of a liquid organic hydrogen carriers (LOHC) composition as defined in claim 1, and (ii) the corresponding dehydrogenated LOHC(s).

7. A method for generating hydrogen comprising at least one step of catalytic dehydrogenation of a composition according to claim 1.

8. The method according to claim 7, wherein said at least one dehydrogenation step is carried out in the presence of one or more catalysts based on copper, ruthenium, manganese, molybdenum, nickel, iridium and/or iron.

9. The method according to any one of claims 7 to 8, wherein said at least one dehydrogenation step is carried out in a reactor, in particular in a reactor comprising the catalyst in a fixed bed and/or in a batch, semi-batch or continuous reactor.

10. The method according to any one of claims 7 to 9, wherein said at least one dehydrogenation step is carried out at a temperature of 80 to 320°C and/or at a pressure of 0.8 to 2 bar.
